# EUROPÄISCHE PATENTSCHRIFT

(11) **EP 0 927 348 B1**
(45) Veröffentlichungstag und Bekanntmachung des Hinweises auf die Patenterteilung: **03.01.2001**
(21) Anmeldenummer: 97909252.5
(22) Anmeldetag: 11.09.1997
(51) Int. Cl.: G01N 21/88

(54) **VERFAHREN UND ANORDNUNG ZUR AUTOMATISCHEN OPTISCHEN QUALITÄTSKONTROLLE VON FLACHEN, EBENEN PRODUKTEN**
AUTOMATIC, OPTICAL QUALITY CONTROL PROCESS AND DEVICE FOR FLAT, EVEN PRODUCTS
PROCEDE ET DISPOSITIF POUR CONTROLER AUTOMATIQUEMENT PAR VOIE OPTIQUE LA QUALITE DE PRODUITS PLATS ET LISSES

(30) Priorität: 18.09.1996 DE 19638065
(43) Veröffentlichungstag der Anmeldung: 07.07.1999
(73) Patentinhaber: Massen Machine Vision Systems GmbH, 78467 Konstanz (DE)
(72) Erfinder: RICHTER, Harald, D-78467 Konstanz (DE); ROTHE, Olaf, D-88690 Oberuhldingen (DE); MASSEN, Robert, D-78337 Öhningen (DE)
(74) Vertreter: Degwert, Hartmut, Dipl.-Phys.
(86) Internationale Anmeldenummer: EP9704973
(87) Internationale Veröffentlichungsnummer: WO9812543

(56) Entgegenhaltungen:
- EP-A- 0 574 831
- WO-A-93/25894
- WO-A-94/28397
- DE-A- 3 639 636
- DE-A- 4 309 802
- US-A- 4 882 498
- C. BOUKOUVALAS ET AL.: "AUTOMATIC GRADING OF TEXTURED CERAMIC TILES" PROCEEDINGS OF THE SPIE, Bd. 2423, 1995, SAN JOSE, CA, USA, Seiten 248-256, XP002052097

## Beschreibung

Die Erfindung betrifft ein Verfahren zur automatischen optischen Qualitätskontrolle von flachen, ebenen Produkten mit farbiger und spiegelnder oder teilspiegelnder Oberfläche, insbesondere Fliesen, wie es im Oberbegriff des Anspruchs 1 angegeben ist.

Ein solches Verfahren ist aus der Druckschrift "Automatic Grading of Textured Ceramic Tiles" von C. Boukouvalas et al. in "Proceedings of the Spie", Bd. 2423, 1995, Seiten 248-256 San Jose, US bekannt.

Unter einer teilspiegelnden Oberfläche wird hier eine Oberfläche verstanden, die im Gegensatz zu einer spiegelnden Oberfläche nicht alle auftreffenden Lichtstrahlen nach dem Reflexionsgesetz reflektiert, sondern einen Teil der auftreffenden Lichtstrahlen streut oder absorbiert, aber dennoch einen erheblichen Teil der auftreffenden Lichtstrahlen spiegelnd reflektiert. Die Oberfläche von keramischen Fliesen ist ein typisches Beispiel für eine teilspiegelnde Oberfläche.

Bei keramischen Fliesen und ähnlichen flachen, ebenen Produkten mit farbiger Oberfläche bestehen sowohl hinsichtlich der Farbgebung als auch hinsichtlich der Oberflächenbeschaffenheit besonders hohe Qualitätsanforderungen. Da Fliesen nebeneinander an relativ großen Wand- oder Bodenflächen angebracht werden, fallen bereits leichte Farbabweichungen zwischen einzelnen Fliesen störend auf. Es ist daher erforderlich, alle produzierten Fliesen in sehr eng tolerierte Farbklassen, sogenannte Farbnuancen, einzuordnen und zu sortieren. Zusammen verkauft werden Lose gleicher Farbnuance. Diese Sortierung nach Farbnuancen ist von besonderer Wichtigkeit für Hersteller, welche zu unterschiedlichen Zeiten den gleichen Fliesentyp nachproduzieren oder welche in unterschiedlichen Werken den gleichen Fliesentyp herstellen. Hier wird nämlich nicht nur eine relative Farbsortierung verlangt, sondern eine Sortierung nach absolut festgelegten Farbnuancen, damit diese Fliesenproduktionen gemischt werden können und auch zu einem späteren Zeitpunkt farbstimmige Nachlieferungen möglich sind.

Dieser Vorgang der Einsortierung von Fliesen in verschiedene Farbnuancen geschieht heute ausschließlich manuell, indem Prüfpersonen am laufenden Band jede Fliese durch visuellen Vergleich mit einem vorliegenden Sortiment nach Nuancen gestufter Fliesen beurteilen und in die am besten passende Farbnuancenklasse einsortieren. Es braucht nicht weiter betont zu werden, daß diese manuelle Sortierung sehr unzuverlässig und fehleranfällig ist; die Ermüdung, die unterschiedliche Tagesform sowie die unterschiedlichen Betrachtungs- und Entscheidungsgewohnheiten verschiedener Prüfer führen dazu, daß diese Sortierung mit einer hohen Streuung versehen ist. Von einer absoluten Farbsortierung kann überhaupt nicht gesprochen werden. Die manuelle Prüfung ist außerdem ein erheblicher Kostenfaktor für Produzenten, die in Hochpreisländern fertigen.

Die gleichen Probleme bestehen bei der außerdem gestellten Forderung, Fliesen mit Oberflächenfehlern, wie Dellen, Blasen, Lunkern, sowie mit lokalen Farbfehlern auszusortieren. Auch diese Aussortierung erfolgt heute noch ausschließlich manuell, gewöhnlich durch die gleichen Personen, die auch die Farbnuancensortierung vornehmen.

Es sind andererseits bereits verschiedene Verfahren zur automatischen Qualitätskontrolle und Farbfehlererkennung bekannt, welche auf der Anwendung von elektronischen Farbkameras und der Auswertung der von den Farbkameras gelieferten elektrischen Bildsignale nach den Verfahren der elektronischen Bildverarbeitung beruhen. So ist in der DE 36 39 636 C2 beschrieben, wie bei textilen Oberflächen lokale Farbfehler durch eine bildpunktweise Farbklassifikation mit Hilfe trainierter Tabellenklassifikatoren ermittelt werden können. Hierzu wird eine aus beliebig vielen Farben bestehende Referenzoberfläche in einer Trainingsphase eingelernt, indem in einem geeignet gewählten Farbraum mehrdimensionale Histogramme der von einer Farbkamera gelieferten Farbvektoren erstellt werden und durch Binarisierung hieraus ein Farbklassifikator für die Zuordnung jedes Bildpunktes zu einer der gelernten Farbklassen gebildet wird. Dieser Klassifikator wird nach einer weiteren Verallgemeinerungsoperation vorzugsweise als Tabelle abgespeichert. In der Prüfphase wird der Prüfling ebenfalls mit einer Farbkamera erfaßt. Der Farbvektor jedes Bildpunktes des von dem Prüfling gewonnenen Bildes bildet eine Adresse für den Tabellenklassifikator und liest den unter dieser Adresse gespeicherten Farbklassencode aus. Damit liegt nach der Abarbeitung des gesamten Farbbildes des Prüflings ein neues Bild vor, bei welchem jedem Bildpunkt nicht mehr ein Farbvektor, sondern die Zugehörigkeit zu einer von mehreren gelernten Farbklassen zugeordnet ist, also ein sogenanntes Farbklassenbild.

In der PCT-Veröffentlichung WO 94/23276 ist beschrieben, wie Farbabweichungen durch Vergleich der mehrdimensionalen Farbvektorhistogramme einer Referenz und eines Prüflings sehr genau mit Hilfe von Farbkameras gemessen werden können, ohne daß diese Histogramme binarisiert werden. In dieser Druckschrift sind auch verschiedene Verfahren zur Bildung solcher Vergleiche beschrieben.

In diesen Druckschriften sind aber keine Verfahren beschrieben, die es ermöglichen, farbige Oberflächen, insbesondere von Fliesen, automatisch in eine von mehreren vorgegebenen Farbnuancenklassen so einzusortieren, wie es der Sortierung durch einen menschlichen Prüfer entspricht. Auch geben diese Druckschriften keine Verfahren an, mit denen nichtfarbige lokale Oberflächenfehler, wie Dellen, Blasen, Lunker oder Neigungen der Oberfläche erkannt werden können. Einer automatischen Erkennung solcher Oberflächenfehler steht insbesondere die Tatsache entgegen, daß es sich dabei um lokale Dickenfehler handelt, die nur in spiegelnder Reflexion zu erkennen sind. Ferner sind Fliesen oft durch erhabene oder aufgedruckte, meist sehr kompliziert geformte Strukturmuster gekennzeichnet, welche oft viel ausgeprägter als die Oberflächenfehler sind, die daher von diesen Strukturmustern nicht oder nur sehr schwer unterschieden werden können.

Ferner ist aus der WO 93/25894 eine Prüfstation mit einer Beleuchtungseinrichtung, mehreren elektronischen Kameras und einer Auswertevorrichtung bekannt, bei der zur radiometrischen, geometrischen und kolorimetrischen Kalibrierung der Bildsensoren der Kameras in deren Blickfeld Musterfelder von Helligkeits-, Linien- und Struktur- bzw. Farbmustern angeordnet werden und die so erhaltenen Bildsignale zur Gewinnung von Kalibrationsdaten verwendet werden.

Aufgabe der Erfindung ist die Schaffung eines industriell einsetzbaren Verfahrens, mit welchem keramische Fliesen und ähnliche Produkte automatisch mit gleicher Differenzierung wie durch menschliche Prüfer in Farbnuancenklassen einsortiert und zugleich auf Oberflächenfehler geprüft werden können.

Zur Lösung dieser Aufgabe wird ein Verfahren mit den Merkmalen des Patentanspruchs 1 vorgeschlagen.

Vorteilhafte Ausgestaltungen und Weiterbildungen des erfindungsgemäßen Verfahrens sowie eine Anordnung zur Durchführung des Verfahrens sind in den Unteransprüchen gekennzeichnet.

Weitere Merkmale und Vorteile der Erfindung ergeben sich aus der folgenden Beschreibung von Ausführungsbeispielen an Hand der Zeichnungen. In den Zeichnungen zeigen:
- Fig. 1: das Schema einer Anordnung zur Erkennung der Farbnuance und lokaler Farbfehler der Oberfläche einer Fliese mit Hilfe eines Tabellenklassifikators,
- Fig. 2: das Schema eines Klassifikators zur Einsortierung der Fliese in eine von mehreren vorgegebenen Farbnuancen,
- Fig. 3: eine Abänderung des Klassifikators zur Anpassung der erkannten Farbnuancen an den menschlichen visuellen Eindruck,
- Fig. 4: das Schema einer Anordnung bekannter Art zur automatischen Erkennung von Oberflächenfehlern bei fehlerfreier Oberfläche,
- Fig. 5: die Anordnung von Fig. 4 bei fehlerhafter Oberfläche,
- Fig. 6: das Schema einer Anordnung zur Erkennung von Oberflächenfehlern gemäß der Erfindung,
- Fig. 7: eine abgeänderte Ausführungsform der Anordnung von Fig. 6
- Fig. 8: eine schematische Seitenansicht einer weiteren Ausführungsform der Anordnung zur Erkennung von Oberflächenfehlern gemäß der Erfindung und
- Fig. 9: eine schematische Stirnansicht der Anordnung von Fig. 8.

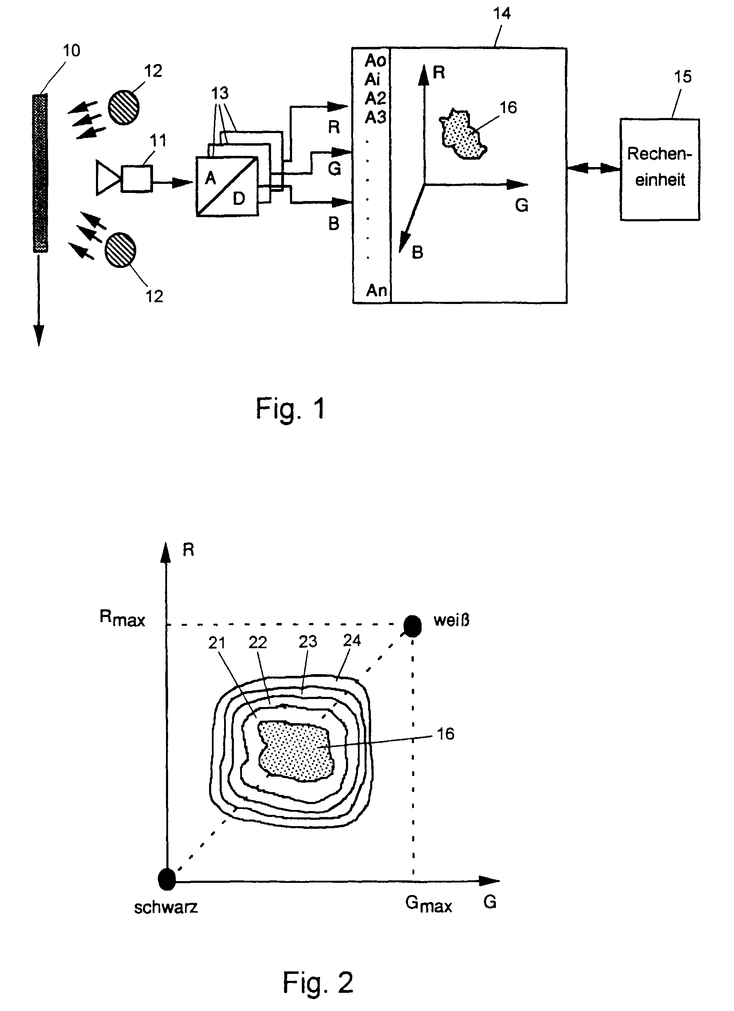

Fig. 1 zeigt schematisch die Erkennung von Farbnuancen bei Fliesen. In einer Trainingsphase wird ein Farbklassifikator gelernt, welcher die Farbverteilung einer Referenzfläche wiedergibt. Hierzu wird das Bild der Oberfläche einer Referenzfliese 10 von einer Farbkamera 11 unter einer von Lichtquellen 12 erzeugten geeigneten diffusen Beleuchtung aufgenommen. Die Farbkamera 11 kann eine Matrixkamera sein, die ein flächenhaftes Bild der Oberfläche der Referenzfliese oder eines Teils dieser Oberfläche aufnimmt, oder sie kann eine Zeilenkamera sein, die das Bild der Oberfläche zeilenweise aufnimmt, während die Referenzfliese 10 in der Pfeilrichtung vor der Farbkamera 11 vorbeigeführt wird. Die von der Farbkamera 11 gelieferten Signale der einzelnen Farbkomponenten, beim dargestellten Beispiel die RGB-Signale, werden in Analog-Digital-Umsetzern 13 bildpunktweise digitalisiert. Die digitalisierten RGB-Signale jedes Bildpunktes bilden eine Adresse A0, A1, ... An, welche den durch einen Tabellenspeicher 14 gebildeten Farbklassifikator adressieren. Durch eine Recheneinheit 15 wird in diesem Tabellenspeicher 14 während der Trainingsphase das Histogramm der Farbvektoren des von der Referenzfliese 10 gewonnenen Farbbildes gebildet, gegebenenfalls verallgemeinert und anschließend binarisiert. Dieses Verfahren ist im einzelnen in den Dokumenten DE 36 39 636 C2 und WO 94/23276 beschrieben.

Nach Beendigung der Trainingsphase ist im Tabellenspeicher 14 eine Region markiert, welche den am häufigsten vorkommenden Farbvektoren der Referenzfliese 10 entspricht. Diese Region bildet in der Regel eine Wolke 16 benachbarter Farbvektoren, die auch unter der englischen Bezeichnung "cluster" bekannt ist.

Das bisher beschriebene Verfahren kann in jeder aus den vorgenannten Druckschriften bekannten Weise durchgeführt werden. So ist es insbesondere möglich, die Referenzfliese und die Prüflinge in der aus der DE 36 39 636 C2 bekannten Weise anstatt mit einer Farbkamera mit mehreren Farbkameras aufzunehmen, die parallel nebeneinanderliegende Bereiche aufnehmen. Ferner kann der Farbklassifikator anstatt im RGB-Farbraum auch in einem anderen geeigneten Farbraum erstellt werden, beispielsweise im IHS-Farbraum, in den die von der Farbkamera gelieferten RGB-Signale umgesetzt werden, wie gleichfalls aus der DE 36 39 636 C2 bekannt ist.

Mit den bekannten Verfahren ist es jedoch nicht möglich, ein Problem zu lösen, das insbesondere bei der Herstellung von Fliesen besteht. Da Fliesen nebeneinander an relativ großen Wand- oder Bodenflächen angebracht werden, fallen bereits leichte Farbabweichungen zwischen einzelnen Fliesen störend auf. Es ist daher erforderlich, alle produzierten Fliesen in sehr eng tolerierten Farbklassen, sogenannten Farbnuancen, einzuordnen und zu sortieren. Das nachfolgend beschriebene Verfahren ermöglicht eine solche Erkennung von Farbnuancen.

Fig. 2 zeigt einen Schnitt durch die im Farbklassifikator 14 gebildete Wolke 16 für einen konstanten Wert der Blaukomponente B. Die gelernte Referenzfolge 16 ist in dieser zweidimensionalen Darstellung als flächenhaftes Gebiet zu erkennen, das parallel zur RG-Ebene in der Zeichenebene liegt. Der Schwerpunkt dieses Gebiets entspricht dem am häufigsten vorkommenden Farbvektor der Referenzfliese.

Zur Einsortierung in Farbnuancen wird der Tabellenspeicher 14 nach der Trainingsphase mit weiteren, schalenförmig um die Referenzwolke 16 angeordneten Gebieten belegt. Im dargestellten Beispiel sind vier solcher Schalen 21, 22, 23, 24 außerhalb der Referenzwolke 16 und in wachsender Entfernung von dieser angelegt worden. Im Schnittbild von Fig. 2 erscheinen diese Schalen als vier ringförmige Regionen, die den Querschnitt der Referenzwolke 16 umgeben. Jede Schale entspricht einer Farbnuance, wobei die näher an der Referenzwolke liegenden Schalen denjenigen Farbnuancen entsprechen, welche sich nur wenig von der Farbe der Referenzfliese unterscheiden. So liegt in Fig. 2 die Farbnuance der Schale 21 noch sehr nahe bei der Farbnuance der Referenzfliese, während die Farbnuance der Schale 24 bereits eine sehr deutliche Abweichung von der Referenzfliese aufweist.

Daß in dem dargestellten Beispiel alle Schalen außerhalb der gelernten Referenzwolke 16 liegen, geschieht nur aus Gründen der besseren Verständlichkeit der zeichnerischen Darstellung. Es ist genauso möglich, Schalen festzulegen, welche sich innerhalb der Referenzwolke befinden. Dies entspricht dann Farbnuancen, welche sich dadurch auszeichnen, daß nicht alle in der Referenzfliese vorhandenen Farben im Prüfling vorhanden sind. Desgleichen können Schalen bestimmt werden, die teilweise innerhalb und teilweise außerhalb der Referenzwolke liegen.

Im einfachsten Fall werden die Schalen 21 bis 24 nach Fig. 2 so festgelegt, daß sie jeweils einen bestimmten konstanten Abstand vom Rand der Referenzwolke 16 und eine konstante Dicke haben. Eine solche Festlegung ist rechnerisch einfach von der Recheneinheit 15 von Fig. 1 durchzuführen. Sie hat aber den Nachteil, daß dadurch nicht berücksichtigt wird, daß der visuelle Farbdifferenzeindruck selten mit dem geometrischen Abstand der betrachteten Farbvektoren übereinstimmt. Insbesondere ist der geometrische Abstand zweier RGB-Farbvektoren kaum mit dem visuellen Farbdifferenzeindruck korreliert; die Farbmetrik in RGB-Farbraum entspricht nicht dem visuellen Farbdifferenzeindruck des Menschen.

Vorzugsweise werden daher die jeweils einer Farbnuance zugeordneten Schalen im dreidimensionalen Farbklassifikator so angelegt, daß sie der visuell wahrgenommenen Farbnuance entsprechen. Dies bedeutet, daß die Schalen im RGB-Farbraum nicht konzentrisch und in gleichen Abständen um die gelernte Farbwolke liegen. Insbesondere werden vorzugsweise die Schalen so verformt, daß sie entlang der Intensitätsachse weiter auseinanderliegen als in den anderen Raumrichtungen des Farbraums. Hierdurch wird berücksichtigt, daß viele Farbnuancen hauptsächlich aus einer Änderung der Helligkeit bestehen, die durch eine falsche Dosierung der Pigmente hervorgerufen ist. Sie haben ihren Ursprung nicht so sehr in Farbfehlern der verwendeten Pigmente, welche in der Regel mit hoher Genauigkeit von der Pigmentindustrie angeboten werden, sondern in der Ungenauigkeit der Konzentration der Pigmente.

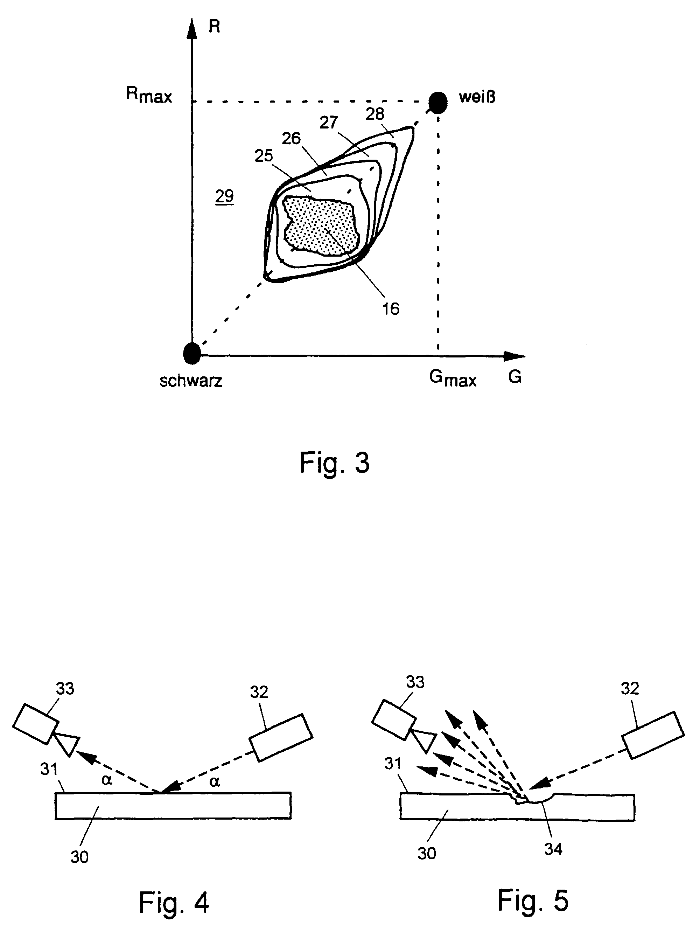

In Fig. 3 ist zur Verdeutlichung stark übertrieben die Festlegung von vier Farbnuancen 25, 26, 27, 28 als längliche Schalen um die Referenzwolke 16 dargestellt. Die Längsachsen dieser eher eiförmigen Schalen sind entlang der Schwarz-Weiß-Achse ausgerichtet. Der Wechsel von der Farbnuance 25 über die Farbnuancen 26 und 27 zur extremen Farbnuance 28 bedeutet in diesem Beispiel, daß die Fliesen, die diese Farbnuancen aufweisen, zunehmend heller erscheinen als die Referenzfliese.

Die beliebige Verformung und Positionierung der Farbnuancenschalen bezogen auf die Referenzwolke ermöglicht eine besonders feinfühlige Einstellung des Farbnuancenklassifikators, um Zuordnungen zu Farbnuancen zu erhalten, wie sie der manuell arbeitende, ausgeruhte und konzentrierte menschliche Prüfer auch durchführen würde. Die Festlegung der genauen Form und Lage dieser Schalen kann iterativ erfolgen, indem diese Parameter so lange variiert werden, bis die Klassifikationsergebnisse der automatischen Klassifikation denjenigen eines menschlichen Prüfers entsprechen. Die Durchführung solcher Experimente ist in der Farbmetrik geläufig und braucht daher hier nicht näher erläutert zu werden.

Farbvektoren mit einer sehr großen Abweichung von der Referenz entsprechen so großen Farbabweichungen, daß nicht mehr von einer Farbnuance, sondern von einem lokalen Farbfehler gesprochen werden muß. Solche lokalen Farbfehler kommen bei der Fliesenproduktion häufig vor, beispielsweise durch Befall mit schwarzen Rußpartikeln, durch Ölflecke usw. Sie können mit dem beschriebenen Verfahren gleichzeitig mit der Prüfung der Farbnuancen detektiert werden. In Fig. 3 ist das Gebiet 29, das alle Positionen des Tabellenklassifikators außerhalb der Farbnuancenschalen umfaßt, mit dem Code "lokaler Farbfehler" belegt.

Nachdem in der Trainingsphase der Tabellenklassifikator in der zuvor beschriebenen Weise mit dem Gebiet der Sollfarben der Referenzfliese, d.h. mit der Referenzwolke, sowie mit den Schalen, welche den zu erkennenden Farbnuancen entsprechen, belegt worden ist, kann die eigentliche Prüfung der gefertigten Fliesen beginnen. Diese Prüfung läuft in den folgenden Schritten ab:
a) Das Bild des Prüflings wird in gleicher Weise wie zuvor das Bild der Referenzfliese von einer oder mehreren Farbkameras aufgenommen.
b) Der Farbvektor jedes Bildpunktes des Farbbildes des Prüflings adressiert den Tabellenklassifikator, wodurch jeweils ein Code ausgelesen wird, welcher der adressierten Farbnuance entspricht. Es entsteht somit ein Bild, in welchem jedem Bildpunkt ein Code für die Zugehörigkeit zu einer Farbnuance bzw. zu einem lokalen Farbfehler zugeordnet ist. Dieses Bild kann als "Farbnuancenklassenbild" bezeichnet werden.
c) Durch statistische und/oder geometrische Auswertung aller Bildpunkte mit ihrer zugehörigen Farbnuance durch die Recheneinheit 15 wird die dominierende Farbnuance des Prüflings bestimmt. Die statistische Auswertung ist im einfachsten Fall eine Mittelwertbildung, sie kann aber genauer auch über die Auswertung der Häufigkeit des Auftretens der verschiedenen Farbnuancen geschehen. Sinnvolle Entscheidungen für die Festlegung der eigentlichen Farbnuance sind neben dem Mittelwert das Maximum des Farbnuancen-Histogramms, d.h. die am häufigsten vorkommende Farbnuance, oder die Farbnuance, welche einen bestimmten Percentil-Wert des Farbnuancen-Histogramms entspricht.
   Vorzugsweise bleiben bei diesem Schritt der Festlegung der globalen Farbnuance lokale Farbfehler, welche sich durch starke Ausreißer in Farbnuancen-Histogramm äußern, unberücksichtigt.
   Vorzugsweise wird auch die geometrische Verteilung von Bildpunkten mit gleichen Farbnuancen-Klassen berücksichtigt. So kann es bei stark strukturierten Fliesen sinnvoll sein, vereinzelte Bildpunkte mit einer von der Umgebung abweichenden Farbnuancenklasse aus der Mittelwertbildung oder der Histogrammauswertung auszuschließen, da sie in der Regel auf der Restunsicherheit des Klassifikators beruhen.
d) Bildpunkte mit einem Farbnuancencode außerhalb der definierten Farbnuancen werden als lokale Farbfehler erkannt. Sofern diese Gebiete bestimmte, vorgegebene Toleranzschwellen überschreiten, wird die Fehlermeldung "lokaler Farbfehler vorhanden" erzeugt. Hierbei können als Toleranzen Maße wie die Anzahl benachbarter Bildpunkte mit Farbfehlern (die "Fehlerfläche"), die Signifikanz der Farbabweichung und ähnliche Maße verwendet werden, welche auch den radiometrischen und geometrischen Eigenschaften der Farbfehler aufbauen.

Um das beschriebene Verfahren robust und auch bei Driften der Kameraelektronik, der Beleuchtung, der Außentemperatur usw. absolut konstant zu halten, kann gemäß einer bevorzugten Ausführungsform in vorgegebenen Zeitabständen eine Anordnung von Farbreferenzen in das Bildfeld der Kamera geschwenkt und die gesamte Anordnung automatisch rekalibriert werden.

Eine Alternative hierzu besteht darin, daß bei jeder Bildaufnahme im Bildfeld der Kamera neben dem Prüfling gleichzeitig Farbreferenzen erfaßt werden und permanent eine Autokalibration der Farbinspektionseinrichtung durchgeführt wird.

Neben der Erkennung von lokalen Farbfehlern sowie der Einsortierung der Fliesen in eine von mehreren vorgegebenen Farbnuancenklassen müssen dreidimensionale Fehler wie Dellen, Lunker, Blasen und ähnliche Fehler, die sich durch eine lokale Änderung der Dicke oder der Oberflächenneigung ausprägen, sicher erkannt werden. Diese im diffusen Auflicht unsichtbaren Fehler sind insbesondere bei glatten Wandfliesen störend, da diese Fliesen vom Kunden aus großer Nähe und aus sehr unterschiedlichen Blickwinkeln betrachtet werden, so daß die Fehler dem menschlichen Auge sofort auffallen.

Ein häufig angewendetes bekanntes Verfahren zur Detektion von Oberflächenfehlern, beispielsweise bei der Qualitätskontrolle von Stahlblechen, beruht auf der Betrachtung der Oberfläche im Hellfeld. Dieses bekannte Verfahren ist in den Figuren 4 und 5 schematisch am Beispiel der Prüfung der Oberfläche eines Prüflings 30 dargestellt. Die Oberfläche 31 des Prüflings 30 wird mit einer Lichtquelle 32 in einem flachen Winkel a beleuchtet. Eine Kamera 33, die vorzugsweise eine Zeilenkamera ist, empfängt das im Reflexionswinkel a reflektierte Licht. Wenn die Oberfläche glatt und fehlerfrei ist, reflektiert sie die gesamte Lichtintensität in die Pupille der Kamera 33. Wenn dagegen die Oberfläche 31 einen Fehler in Form einer Vertiefung 34 aufweist, wie in Fig. 5 dargestellt ist, wird an dieser Vertiefung ein Teil der reflektierten Lichtintensität in den Raum gestreut, so daß weniger Licht in die Eintrittspupille der Kamera 33 gelangt. Solche Fehler erscheinen daher als dunkle Stellen im Kamerabild.

Dieses Verfahren der Hellfeldbetrachtung hat mehrere Nachteile:
1. Bei variabler Produktdicke muß das aus Kamera und Beleuchtung bestehende System mechanisch nachgestellt werden, damit die geometrischen Beziehungen erhalten bleiben.
2. Der Prüfling muß sehr ruhig ohne Winkelbewegungen geführt werden.
3. Bei flachen Vertiefungen ist die Lichtabnahme an der Kamera sehr klein, so daß sich Fehler nur als sehr kontrastarme Helligkeitsunterschiede äußern.

Diese Nachteile bleiben bestehen, wenn dieses bekannte Verfahren auf die Inspektion der Oberflächen von Fliesen zur Erkennung von Dellen und ähnlichen Fehlern angewendet wird; sie sind in diesem Fall so gravierend, daß ein robuster industrieller Einsatz nicht möglich ist. Entweder werden Fehler nicht erkannt, oder es entstehen unzumutbar viele Fehlalarme, insbesondere wenn Fliesen mit einer gewünschten Oberflächenstruktur geprüft werden sollen.

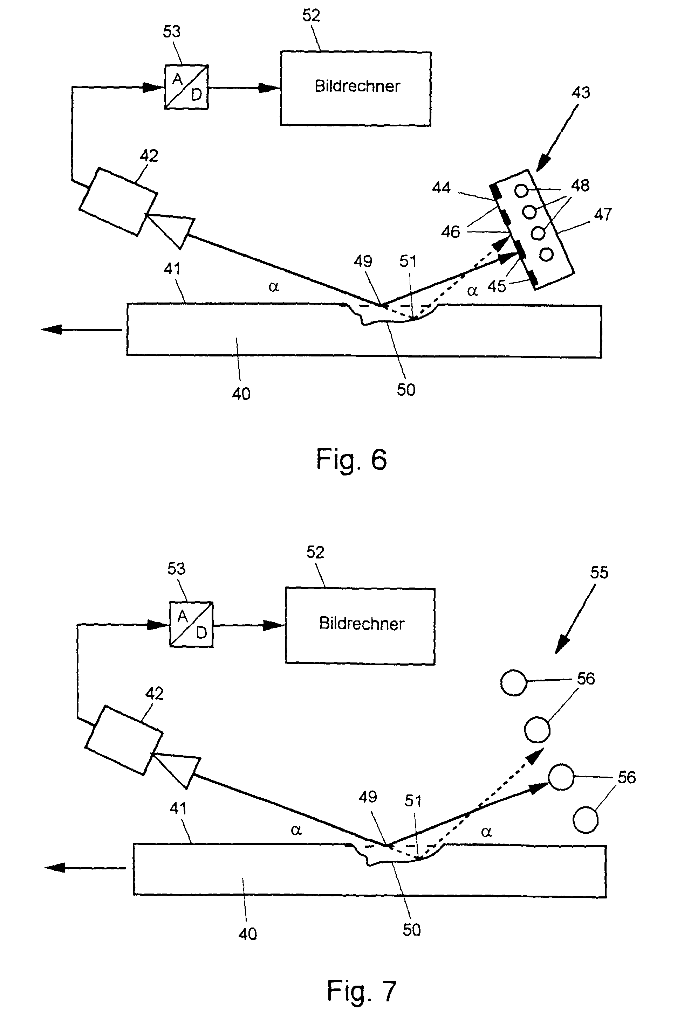

Anhand von Fig. 6 wird ein neues Verfahren beschrieben, das die Nachteile des Verfahrens von Fig. 4 und 5 nicht aufweist und insbesondere für die Inspektion von Fliesen geeignet ist. Für die folgende Beschreibung der optischen Vorgänge ist es unerheblich, ob der optische Strahl als von der Kamera ausgehend oder von der Beleuchtung ausgehend angenommen wird. Wesentlich sind nur die geometrischen Verhältnisse, insbesondere die Winkelverhältnisse. Aus Gründen der Anschaulichkeit wird nachfolgend die Richtung der optischen Strahlen von der Kamera zur Beleuchtung gewählt.

Fig. 6 zeigt eine zu prüfende Fliese 40, die in der Richtung des Pfeils verschoben wird und deren spiegelnde oder teilspiegelnde Oberfläche 41 von einer Kamera 42 in einem relativ flachen Winkel a beobachtet wird. Die Kamera 42 kann eine Matrixkamera oder eine Zeilenkamera sein, und sie kann eine Schwarz-Weiß-Kamera oder eine Farbkamera sein. In der folgenden Beschreibung wird zunächst angenommen, daß sie eine Schwarz-Weiß-Zeilenkamera ist, die so angeordnet ist, daß die Zeilenrichtung quer zur Vorschubrichtung und parallel zur Oberfläche 41 der Fliese 40 verläuft. Eine Beleuchtungseinrichtung 43 hat eine weiße leuchtende Fläche 44, auf der eine Reihe von schwarzen Streifen 45 angebracht sind, die parallel zur Oberfläche 41 der Fliese 40 ausgerichtet sind. Im einfachsten Fall besteht die Beleuchtungseinrichtung 43 aus einem Lichtkasten 47, der im Inneren mehrere Lichtquellen 48 enthält und dessen Vorderseite durch eine lichtdurchlässige Platte oder Folie 44 mit aufgebrachten lichtundurchlässigen schwarzen Streifen 45 abgedeckt ist, zwischen denen die Platte oder Folie 44 helle Streifen 46 bildet. Die abwechselnden schwarzen und hellen Streifen 45 und 46 bilden somit die Elemente eines Beleuchtungsmusters, das die Oberfläche 41 der Fliese 40 beleuchtet.

Die Zeilenkamera 42 sieht eine Zeile des Spiegelbildes des Beleuchtungsmusters, die infolge des Vorschubs der Fliese 40 aufeinanderfolgenden Zeilen des Bildes der Fliesenoberfläche 41 überlagert ist. Wenn die Reflexion an einer fehlerfreien Stelle der Fliesenoberfläche 41 erfolgt, wie in Fig. 6 an der Stelle 49 angedeutet ist, stammt diese Zeile, je nach der Dicke der Fliese und der Winkelanordnung der Zeilenkamera 42 und der Beleuchtungseinrichtung 43, entweder von einem schwarzen Streifen 45 oder von einem dazwischenliegenden hellen Streifen 46 der Leuchtfläche 44. In jedem Fall erzeugt eine glatte Fliesenoberfläche, wenn die Fliese 40 in der Pfeilrichtung an der Zeilenkamera 40 vorbeigeht, ein Bild mit einer homogenen gleichförmigen Helligkeit, das entweder gleichmäßig hell oder gleichmäßig dunkel ist.

Weist jedoch die Oberfläche 41 der Fliese 40 einen Fehler auf, wie den in Fig. 6 dargestellten dellenförmigen Fehler 50, so wird der zwischen der Kamera 42 und der Beleuchtungseinrichtung 43 verlaufende optische Strahl durch die von 0° abweichende lokale Neigung der Oberfläche an der Reflexionsstelle 51 von der ursprünglichen Richtung abgelenkt, so daß er auf einen anderen Bereich des Beleuchtungsmusters auftrifft, bei dem in Fig. 6 dargestellten Beispiel auf einen hellen Streifen 46. Somit verursachen Fehler der Oberfläche erhebliche lokale Helligkeitsänderungen in dem von der Zeilenkamera 42 erfaßten Bild, die sich deutlich von dem sonst homogenen Bild abheben. Wenn die Dicke der Fliese 40 nicht bekannt ist, kann von vornherein nicht gesagt werden, ob das homogene Bild bei einer fehlerfreien Oberfläche konstant hell oder konstant dunkel ist. Dies ist aber auch nicht erforderlich, da sich in jedem Fall Fehler der Oberfläche, die die Form von Vertiefungen oder Erhöhungen haben, in lokalen Helligkeitsänderungen in dem von der Zeilenkamera aufgenommenen Bild äußern.

Wenn die Kamera 42 eine Matrixkamera ist, erfaßt sie nicht nur das Spiegelbild einer Zeile des Beleuchtungsmusters, sondern das Spiegelbild des ganzen Beleuchtungsmusters oder eines Ausschnitts davon. Das aufgenommene Spiegelbild zeigt also bei einer fehlerfreien Oberfläche 41 die abwechselnden dunklen und hellen Streifen 45 und 46 des Beleuchtungsmusters. Bei fehlerhafter Oberfläche 41 erscheinen in diesem Spiegelbild wieder lokale Helligkeitsänderungen am Ort jedes Fehlers, also helle Stellen in den dunklen Streifen und dunkle Stellen in den hellen Streifen. Während bei Verwendung einer Zeilenkamera zur Prüfung der gesamten Oberfläche 41 die Erfassung einer Zeile des Beleuchtungsmusters wiederholt werden muß, bis die gesamte Oberfläche 41 durch die Reflexionsstelle dieser Zeile hindurchgegangen ist, genügt bei Verwendung einer Matrixkamera eine einzige Aufnahme in dem Zeitpunkt, in dem das erfaßte Spiegelbild von der gesamten Oberfläche 41 reflektiert wird. Wenn das Bildfeld der Matrixkamera oder die Größe des Beleuchtungsmusters hierzu nicht ausreicht, können mehrere Aufnahmen des von verschiedenen Bereichen der Oberfläche 41 reflektierten Spiegelbildes nacheinander gemacht werden.

Die lokalen Helligkeitsänderungen werden in erster Linie durch die lokalen Änderungen des Neigungswinkels der reflektierenden Fläche verursacht. Selbst wenn der Fall eintritt, daß der am Boden einer Vertiefung reflektierte optische Strahl wieder auf einen Bereich der Beleuchtungseinrichtung 43 auftrifft, der die gleiche Helligkeit hat wie der Bereich, auf den der an der fehlerfreien Oberfläche reflektierte optische Strahl auftreffen würde, gibt es doch zwischen diesen Reflexionsstellen eine Übergangszone mit anderen Flächenneigungen, durch die der optische Strahl so abgelenkt wird, daß er auf der Beleuchtungseinrichtun 43 Bereiche unterschiedlicher Helligkeit überstreicht. Dadurch entstehen in dem von der Kamera 42 aufgenommenen Bild der Oberfläche 41 um den Umfang der Vertiefung verlaufende Randzonen unterschiedlicher Helligkeit, die deutlich in Erscheinung treten. Desgleichen verursachen Risse oder Rillen langgestreckte Streifen unterschiedlicher Helligkeit, die den Verlauf des Oberflächenfehlers erkennen lassen.

Solche lokalen Helligkeitsänderungen können mit bekannten Verfahren der Bildverarbeitung, wie Gradientenfilterung, Subtraktion mit Betragsbildung oder dergleichen leicht vom homogenen Hintergrund automatisch unterschieden werden. Diese Verfahren sind dem Fachmann der Bildverarbeitung bekannt. Somit wird durch das beschriebene Verfahren erreicht, daß sich bei gleichbleibender mechanischer Anordnung der Kamera 42 und der Beleuchtungseinrichtung 43 trotz unterschiedlicher Fliesendicke Fehler der Fliesenoberfläche immer durch starken lokalen Helligkeitskontrast äußern.

Die automatische Fehlererkennung erfolgt bei dem in Fig. 6 dargestellten Ausführungsbeispiel durch einen Bildrechner 52, dem das Ausgangssignal der Kamera 42 über einen Digital-Analog-Umsetzer 53 zugeführt wird und der zur Durchführung der zuvor erwähnten Bildverarbeitung programmiert ist. Der Bildrechner 52 kann einen Bildspeicher enthalten, in dem das von der Kamera 42 aufgenommene Bild abgespeichert und dann ausgewertet wird.

In Fig. 7 ist eine andere Ausführungsform der Anordnung zur Erkennung von Oberflächenfehlern dargestellt. Die Anordnung von Fig. 7 unterscheidet sich von der Anordnung von Fig. 6 nur durch eine andere Ausbildung der Beleuchtungseinrichtung 55, die durch mehrere parallel zueinander und parallel zur Oberfläche 41 der Fliese 40 angeordnete längliche Leuchtkörper 56 gebildet ist, die sich quer zur Vorschubrichtung der Fliesen erstrecken. Die übrigen Bestandteile der Anordnung von Fig. 7 entsprechen denjenigen der Anordnung von Fig. 6 und sind mit den gleichen Bezugszeichen wie dort bezeichnet. Die Leuchtkörper 56, die beispielsweise durch Gasentladungsröhren gebildet sein können, wirken als leuchtende Streifen, während die Zwischenräume zwischen den Leuchtkörpern 56 den Effekt der dunklen Streifen 45 der Beleuchtungseinrichtung 43 von Fig. 6 ergeben, so daß die Beleuchtungseinrichtung 55 von Fig. 7 hinsichtlich der Erfassung des Bildes der Fliesenoberfläche 41 durch die Kamera 42 die gleiche Wirkung wie das Streifenmuster der Beleuchtungseinrichtung 43 von Fig. 6 ergibt. In diesem Fall bilden also die Leuchtkörper 56 und die Zwischenräume zwischen den Leuchtkörpern die abwechselnden Elemente des Beleuchtungsmusters. Im Extremfall genügt bei Verwendung einer Zeilenkamera ein einziger Leuchtkörper 56, der so angeordnet ist, daß der an der fehlerfreien Fliesenoberfläche 41 reflektierte optische Strahl auf diesen Leuchtkörper auftrifft.

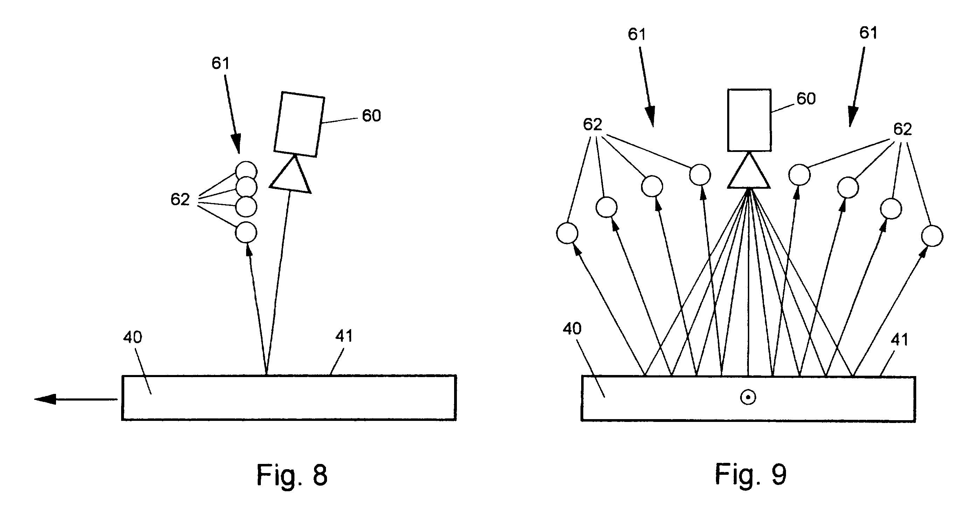

In den Figuren 8 und 9 ist eine weitere Ausführungsform der Anordnung zur Erfassung von Oberflächenfehlern dargestellt, wobei Fig. 8 eine Seitenansicht und Fig. 9 eine Stirnansicht zeigt. Dies Figuren zeigen wieder eine Fliese 40, die in der Pfeilrichtung vorgeschoben wird und deren Oberfläche 41 mit Hilfe einer Kamera 60 und einer Beleuchtungseinrichtung 61 in spiegelnder Reflexion auf Oberflächenfehler geprüft wird. Im Unterschied zu den Anordnungen von Fig. 6 und 7, bei denen die spiegelnde Reflexion in einem flachen Winkel erfolgt, sind bei der Anordnung von Fig. 8 und 9 die Kamera 60 und die Beleuchtungseinrichtung 61 senkrecht über der Fliese 40 angeordnet, und die spiegelnde Reflexion erfolgt in einem Winkel von nahezu 90°. Bei dem dargestellten Beispiel ist die Kamera 60 eine Zeilenkamera, und die Beleuchtungseinrichtung 61 besteht aus einer Anzahl von punktförmigen Lichtquellen 62, die so angeordnet sind, daß bei fehlerfreier Fliesenoberfläche 41 ein von jeder Lichtquelle 62 kommender Lichtstrahl, der an einem Punkt der von der Zeilenkamera 60 erfaßten Zeile der Fliesenoberfläche 41 reflektiert wird, in die Pupille der Zeilenkamera 60 eintritt. Somit wird die Anordnung der Lichtquellen 62 von der Kamera 60 in dem an der Fliesenoberfläche 41 reflektierten Spiegelbild beobachtet, und Fehler der Fliesenoberfläche, die zur Ablenkung der reflektierten Lichtstrahlen führen, verursachen in gleicher Weise wie bei den Anordnungen von Fig. 6 und 7 lokale Helligkeitsänderungen in dem Bild der Fliesenoberfläche, die zur Erkennung der Oberflächenfehler ausgewertet werden können.

Die Ausführungsform von Fig. 8 und 9 ist günstig, wenn es aus räumlichen Gründen nicht möglich ist, die Kamera und die Belauchtungseinrichtung so niedrig über den Fliesen anzuordnen, wie dies bei den Anordnungen von Fig. 7 und 8 erforderlich ist. Auch bei dieser Ausführungsform kann anstelle einer Zeilenkamera eine Matrixkamera verwendet werden, wobei dann anstelle der punktförmigen Lichtquellen 62 längliche Leuchtkörper, beispielsweise Gasentladungsröhren, verwendet werden, die parallel zur Fliesenoberfläche 41 angeordnet werden.

Zur Fehlererkennung aufgrund der beschriebenen lokalen Helligkeitsänderungen genügt es bei den zuvor beschriebenen Ausführungsformen, wenn die verwendeten Kameras Schwarz-Weiß-Kameras sind. Es ist jedoch auch möglich, die Streifenbeleuchtung durch eine Anordnung paralleler farbiger Streifen auszubilden und für die beobachtende Kamera eine Farbkamera zu verwenden. Oberflächenfehler, wie Dellen oder dergleichen, führen dann zu lokalen Farbabweichungen gegenüber einem sonst homogenen Farbbild, die mit den gleichen Verfahren wie die Farbnuancen und lokalen Farbfehler bei dem anhand der Figuren 1 bis 3 erläuterten Verfahren detektiert werden können.

Gemäß einer weiteren Ausführungsform ist es auch möglich, das Beleuchtungsmuster anstatt durch parallele Streifen durch eine zweidimensionale Anordnung kontrastreicher Elemente (schwarz-weiß oder farbig) zu gestalten, so daß die Ablenkung der Lichtstrahlen in beiden Raumrichtungen immer zu einem Helligkeitsunterschied bzw. zu einem Farbunterschied führt. Dies kann beispielhaft durch eine regelmäßige Anordnung von schwarzen oder farbigen Punkten auf einem hellen Hintergrund geschehen.

Das Beleuchtungsmuster kann auch in Abhängigkeit von dem jeweils zu untersuchenden Oberflächentyp wechselnde Strukturen haben, die so gewählt werden, daß die zu erfassenden Oberflächenfehler maximale Helligkeitsänderungen bzw. Farbänderungen in dem von der Kamera aufgenommenen Bild ergeben. Zum Zweck des schnellen Wechsels des Beleuchtungsmusters kann vorgesehen werden, daß die Struktur des Beleuchtungsmusters rechnergesteuert veränderbar ist. Dies läßt sich beispielsweise dadurch erreichen, daß das Beleuchtungsmuster auf einer Flüssigkristallanzeige ereugt wird.

Es ist dann auch möglich, zur besseren Erkennung von Oberflächenfehlern von dem gleichen Bereich der Oberfläche mehrere Bilder mit jeweils anderem Beleuchtungsmuster aufzunehmen und die Oberflächenfehler durch Auswertung dieser mehreren Bilder zu ermitteln.

Bei reliefartig strukturierten Fliesen werden vor der Fehlererkennung diejenigen Bereiche der Fliesenoberfläche ausmaskiert, in denen sich diese Strukturen befinden. Das Maskenbild der Strukturen kann dem System elektronisch durch Einlesen der Entwurfsdaten mitgeteilt werden. Es kann aber auch automatisch mit der gleichen Anordnung aufgenommen werden, wie sie gemäß den zuvor beschriebenen Ausführungsbeispielen zur Detektion von Oberflächenfehlern verwendet wird, da diese Strukturen ebenfalls den Lichtstrahl ablenken. Dellen und ähnliche Fehler werden dann nur in den glatten Bereichen gemeldet. Dies ist zulässig, da solche Fehler in den gewollten reliefartigen Strukturen ohnehin unsichtbar bleiben. Die Wahrscheinlichkeit von Fehlalarmen wird hierdurch erheblich verringert.

Die beiden zuvor beschriebenen optischen Prüfungen der Fliesen zur Ermittlung von Farbnuancen und Farbfehlern einerseits und zur Ermittlung von Oberflächenfehlern andrerseits können in zwei verschiedenen Zonen durchgeführt werden. Wenn die Fliesen auf einer Fördereinrichtung kontinuierlich vorgeschoben werden, können diese beiden Zonen entlang der Förderstrecke hintereinander liegen. Es ist jedoch auch möglich, die beiden Prüfungen in einer gemeinsamen Zone gleichzeitig durchzuführen. In diesem Fall werden vorzugsweise die Beleuchtungseinrichtung und die Kamera für die Oberflächenprüfung für einen Wellenlängenbereich ausgelegt, für den die für die Farbprüfung verwendeten Kameras nicht empfindlich ist. Ein solcher Wellenlängenbereich ist z.B. der Bereich des nahen Infrarot ab etwa 700 nm. Diese Maßnahme ergibt den Vorteil, daß die beiden Systeme in der gleichen Zone installiert werden können und sich trotzdem gegenseitig nicht stören. Dadurch läßt sich eine kompaktere und kostengünstigere Bauweise im Vergleich zu einem System mit zwei getrennten Inspektionszonen erreichen.

Da in diesem Fall die Prüfergebnisse der Farbprüfung und der Oberflächenprüfung für jede Fliese gleichzeitig erhalten werden, ist es auf besonders einfache Weise möglich, zur Vermeidung von Fehlalarmen und zur Verbesserung der Fehlererkennung die Informationen der für die Erkennung der Farbnuancen und der lokalen Farbfehler zuständigen Kamera mit den Informationen der für die Detektion von Oberflächenfehlern zuständigen Kamera zu kombinieren. Fehler, die in beiden Systemen nur schlecht erkennbar sind, wie z.B. schmale Risse, werden durch Überlagerung der Feststellungen der beiden nach völlig unterschiedlichen Prinzipien arbeitenden Systeme in ihrem Aussagewert angehoben und damit erkennbar.

Eine solche Verknüpfung der von den beiden Systemen gelieferten Informationen ist jedoch auch dann möglich, wenn die beiden Prüfungen nacheinander in verschiedenen Zonen durchgeführt werden. In diesem Fall werden die Ergebnisse der ersten Prüfung für jede Fliese gespeichert und dann, wenn die gleiche Fliese der zweiten Prüfung unterzogen wird, mit den Ergebnissen der zweiten Prüfung kombiniert. Dabei spielt es keine Rolle, welche der beiden Prüfungen zuerst durchgeführt wird.

Unter einer Kamera im Sinne der vorstehenden Beschreibung ist jeder bildgebende elektronische Sensor zu verstehen, der ein optisch aufgenommenes Bild in elektrische Bildsignale umsetzen kann. Hierzu gehören außer den bereits erwähnten Zeilen- und Matrix-Kameras beispielsweise auch punktweise arbeitende Scanner. Unter einer Schwarz-Weiß-Kamera ist ein monochromer bildgebender Sensor dieser Art zu verstehen, der alle Grauwerte zwischen Schwarz und Weiß erfassen und in Grauwertsignale umsetzen kann.

## Patentansprüche

1. Verfahren zur automatischen optischen Qualitätskontrolle von flachen, ebenen Produkten mit farbiger und spiegelnder oder teilspiegelnder Oberfläche, insbesondere Fliesen, bei welchem die Oberfläche (41) jedes Produkts (40) durch mindestens eine elektronische Kamera (11; 42; 60) optisch erfaßt wird und die von der Kamera (11; 42; 60) gelieferten elektrischen Bildsignale nach den Verfahren der elektronischen Bildverarbeitung zur Gewinnung von Qualitätsmaßen ausgewertet werden, mit folgenden Verfahrensschritten:
- zur Durchführung einer Farbprüfung wird die Oberfläche (41) jedes Produkts (41) unter diffuser Weißlichtbeleuchtung durch wenigstens eine Farbkamera (11) aufgenommen;
- durch bildpunktweise Farbklassifikation des Bildes der Oberfläche (41) des Produkts (40) mit einem Farbklassifikator (14), welcher an Hand von zuvor gelernten Gut-Referenzen in dem von den Farbvektoren jedes Bildpunktes aufgespannten Merkmalsraum als Referenzwolke (16) definiert worden ist, wird ein Bild der Oberfläche (41) des Produkts (40) erzeugt, in welchem jedem Bildpunkt eine Farbnuance (25, 26, 27, 28) zugeordnet ist;
- aus der Häufigkeitsverteilung und/oder der geometrischen Form der den Bildpunkten zugeordneten Farbnuancen (25, 26, 27, 28) erfolgt die globale Einstufung des Produkts (40) in eine von mehreren festgelegten Farbnuancenklassen;
dadurch gekennzeichnet, daß der Farbklassifikator (14) das Bild der Oberfläche (41) des Produkts auch an Hand von im gleichen Merkmalsraum festgelegten Gebieten, welche den zulässigen Farbnuancenklassen des Produkts (40) entsprechen, erzeugt, und ferner folgende Verfahrensschritte vorgesehen sind:
- zur Durchführung einer Oberflächenprüfung wird von wenigstens einer weiteren Kamera (42; 60) das an der Produktoberfläche (41) gespiegelte oder teilgespiegelte Bild eines Beleuchtungsmusters aus abwechselnden Elementen unterschiedlicher Helligkeit oder unterschiedlicher Farbe unter einem solchen Winkel (α) erfaßt, daß die zwischen der Kamera (42; 60) und dem Beleuchtungsmuster verlaufenden, an der spiegelnden oder teilspiegelnde Oberfläche (41) reflektierten optischen Strahlen durch Unebenheiten (50) der Oberfläche auf Musterelemente anderer Helligkeit oder Farbe als bei fehlerfreier Oberfläche (41) abgelenkt werden, so daß lokale Helligkeits- oder Farbänderungen in dem von der Kamera (42; 60) aufgenommenen Bild auftreten;
- durch Auswertung der lokalen Helligkeits- oder Farbänderungen werden die sie verursachenden Oberflächenfehler (50) erkannt;
- aus den durch die beiden Prüfungen erhaltenen Informationen werden automatisch Signale für die Sortierung der Produkte (40) nach Farbnuancen (25, 26, 27, 28) und Qualitätsklassen abgeleitet.

2. Verfahren nach Anspruch 1, dadurch gekennzeichnet, daß aus der Häufigkeitsverteilung und/oder der geometrischen Form der den Bildpunkten zugeordneten Farbnuancen (25, 26, 27, 28) lokale Farbfehler erkannt werden, welche sich in einer erheblichen, über die zulässigen Farbnuancen (25, 26, 27, 28) hinausgehenden Farbabweichung äußern.

3. Verfahren nach Anspruch 1 oder 2, dadurch gekennzeichnet, daß zur Einsortierung des Produktes (40) in Farbnuancen (25, 26, 27, 28) in dem von den Farbvektoren jedes Bildpunktes aufgespannten Merkmalsraum um die Referenzwolke (16) der eintrainierten Referenzoberfläche schalenförmige Klassifikationsgebiete (21, 22, 23, 24) gelegt werden, welche mit wachsendem geometrischen Abstand von der Referenzwolke (16) jeweils einer sich entsprechend stark von der Gut-Referenz abweichenden Farbnuancenklasse entsprechen.

4. Verfahren nach einem der Ansprüche 1 bis 3, dadurch gekennzeichnet, daß die den jeweiligen Farbnuancenklassen entsprechenden schalenförmige Gebiete (21, 22, 23, 24) im Vergleich zur Position und Form der Referenzwolke (16) so verschoben und in ihrer Form so verzerrt werden, daß die automatische Zuordnung in Farbnuancen (25, 26, 27, 28) trotz eines dem menschlichen Farbempfinden nicht vollkommen entsprechenden Farbraums des automatischen Systems möglichst derjenigen entspricht, welche durch den menschlichen Prüfer durchgeführt würde.

5. Verfahren nach Anspruch 4, dadurch gekennzeichnet, daß die den jeweiligen Farbnuancen (25, 26, 27, 28) entsprechenden schalenförmigen Gebiete (21, 22, 23, 24) eine längliche, in Richtung der Schwarz-Weiß-Achse des Farbraums ausgerichtete Form haben.

6. Verfahren nach einem der Ansprüche 3 bis 5, dadurch gekennzeichnet, daß sich die schalenförmigen Gebiete (21, 22, 23, 24) nur außerhalb der Referenzwolke (16) befinden.

7. Verfahren nach einem der Ansprüche 3 bis 5, dadurch gekennzeichnet, daß sich die schalenförmigen Gebiete (21, 22, 23, 24) nur innerhalb der Referenzwolke (16) befinden.

8. Verfahren nach einem der Ansprüche 3 bis 5, dadurch gekennzeichnet, daß sich die schalenförmigen Gebiete (21, 22, 23, 24) außerhalb und innerhalb der Referenzwolke (16) befinden.

9. Verfahren nach einem der vorhergehenden Ansprüche, dadurch gekennzeichnet, daß zur Festlegung der globalen Farbnuance (25, 26, 27, 28) aus dem Farbnuancenklassenbild das Histogramm der im Farbnuancenklassenbild vorkommenden Farbnuancen (25, 26, 27, 28) erzeugt wird und aus dem Histogramm ein statistisch signifikanter Wert als globale Farbnuance (25, 26, 27, 28) des Produktes (40) gewählt wird.

10. Verfahren nach Anspruch 9, dadurch gekennzeichnet, daß der statistisch signifikante Wert die Abszisse des Schwerpunktes des Histogramms der Farbnuancenklassen ist.

11. Verfahren nach Anspruch 9, dadurch gekennzeichnet, daß der statistisch signifikante Wert die Abszisse des Maximums des Histogramms ist.

12. Verfahren nach Anspruch 9, dadurch gekennzeichnet, daß der statistisch signifikante Wert die Abszisse eines Percentil-Wertes des Histogramms ist.

13. Verfahren nach einem der Ansprüche 9 bis 12, dadurch gekennzeichnet, daß bei der Ermittlung des Histogramms der Farbnuancenklassen Ausreißer nicht in das Histogramm mit aufgenommen werden.

14. Verfahren nach einem der Ansprüche 9 bis 13, dadurch gekennzeichnet, daß bei der Ermittlung der globalen Farbnuance (25, 26, 27, 28) des Produktes (40) neben den statistischen Merkmalen des Farbnuancenklassenbildes auch die geometrische Verteilung der im Farbnuancenklassenbild vorhandenen, für jeden Bildpunkt ermittelten Farbklassen berücksichtigt wird.

15. Verfahren nach einem der Ansprüche 1 bis 14, dadurch gekennzeichnet, daß in vorgegebenen Zeitabständen Farbreferenzen in das Bildfeld jeder für die Farbprüfung verwendeten Kamera (42; 60) eingeschwenkt werden und das System automatisch rekalibriert wird.

16. Verfahren nach einem der Ansprüche 1 bis 14, dadurch gekennzeichnet, daß permanent im Bildfeld jeder für die Farbprüfung verwendeten Kamera (42, 60) Farbreferenzen eingeblendet sind und das System bei jeder Bildaufnahme automatisch rekalibriert wird.

17. Verfahren nach Anspruch 1, dadurch gekennzeichnet, daß das bei der Oberflächenprüfung verwendete Beleuchtungsmuster ein Streifenmuster ist, das aus abwechselnden Streifen unterschiedlicher Helligkeit oder unterschiedlicher Farbe besteht, die parallel zur Produktoberfläche (41) angeordnet sind.

18. Verfahren nach Anspruch 1, dadurch gekennzeichnet, daß das Beleuchtungsmuster durch eine zweidimensionale Anordnung kontrastreicher Elemente unterschiedlicher Helligkeit oder unterschiedlicher Farbe gebildet ist.

19. Verfahren nach Anspruch 1, dadurch gekennzeichnet, daß das Beleuchtungsmuster in Abhängigkeit von dem zu untersuchenden Oberflächentyp eine Struktur hat, bei der die zu erfassenden Oberflächenfehler (50) maximale Helligkeitsänderungen bzw. Farbänderungen in dem von der Kamera (11) aufgenommenen Bild verursachen.

20. Verfahren nach einem der Ansprüche 1, 17, 18 oder 19, dadurch gekennzeichnet, daß das Beleuchtungsmuster rechnergesteuert veränderbar ist.

21. Verfahren nach Anspruch 20, dadurch gekennzeichnet, daß das Beleuchtungsmuster mit Hilfe einer Flüssigkristallanzeige erzeugt wird.

22. Verfahren nach Anspruch 1 oder einem der Ansprüche 17 bis 21, dadurch gekennzeichnet, daß bei der Oberflächenprüfung von der gleichen Stelle der Produktoberfläche (41) mehrere Bilder mit jeweils anderen Beleuchtungsmustern aufgenommen werden und daß die Oberflächenfehler (50) durch Auswertung mehrerer Bilder ermittelt werden.

23. Verfahren nach einem der Ansprüche 1 bis 22, dadurch gekennzeichnet, daß die Farbprüfung und die Oberflächenprüfung in zwei räumlich getrennten Zonen durchgeführt werden.

24. Verfahren nach einem der Ansprüche 1 bis 23, dadurch gekennzeichnet, daß die Farbprüfung und die Oberflächenprüfung in der gleichen räumlichen Zone durchgeführt werden.

25. Verfahren nach Anspruch 24, dadurch gekennzeichnet, daß die Beleuchtung der Produktoberfläche durch das Beleuchtungsmuster für die Oberflächenprüfung in einem Wellenlängenbereich erfolgt, für den die zur Farbprüfung verwendete Kamera (42; 60) nicht empfindlich ist.

26. Verfahren nach Anspruch 25, dadurch gekennzeichnet, daß der Wellenlängenbereich des Beleuchtungsmusters im nahen Infrarot liegt.

27. Verfahren nach einem der vorhergehenden Ansprüche, dadurch gekennzeichnet, daß für die Erkennung von Oberflächenfehlern (50) die bei der Farbprüfung erhaltenen Ergebnisse mit den bei der Oberflächenprüfung erhaltenen Ergebnissen kombiniert werden.

28. Anordnung zur Durchführung der direkten Prüfung von Unebenheiten auf Oberflächen bei dem Verfahren nach einem der vorhergehenden Ansprüche, gekennzeichnet durch eine Beleuchtungseinrichtung (43; 55; 61), die so ausgebildet und angeordnet ist, daß sie die Produktoberfläche durch ein Beleuchtungsmuster aus abwechselnden Elementen unterschiedlicher Helligkeit oder unterschiedlicher Farbe beleuchtet, durch eine elektronische Kamera (42; 60), die so angeordnet ist, daß sie das an der Produktoberfläche gespiegelte Bild des Beleuchtungsmusters aufnimmt, und durch eine Auswertevorrichtung (15), die die von der Kamera (42; 60) gelieferten Bildsignale zur Erkennung von Helligkeits- oder Farbänderungen in dem von der Kamera (11) aufgenommenen Bild für die direkte Oberflächenprüfung auswertet.

29. Anordnung nach Anspruch 28, dadurch gekennzeichnet, daß die Beleuchtungseinrichtung (43; 55; 61) eine lichtdurchlässige Platte oder Folie (44) aufweist, auf die lichtundurchlässige Musterelemente (45, 46) aufgebracht sind, sowie wenigstens eine Lichtquelle (48), die die Platte oder Folie (44) von der der Kamera (42; 60) abgewandten Rückseite her beleuchtet.

30. Anordnung nach Anspruch 29, dadurch gekennzeichnet, daß die lichtundurchlässigen Musterelemente (45, 46) parallele Streifen sind, die zusammen mit den zwischen ihnen liegenden Streifen der Platte oder Folie (44) das Beleuchtungsmuster bilden.

31. Anordnung nach Anspruch 28, dadurch gekennzeichnet, daß die Beleuchtungseinrichtung (43; 55; 61) mehrere in Abständen liegende Leuchtkörper (48; 56; 62) aufweist, die zusammen mit den zwischen ihnen liegenden Zwischenräumen das Beleuchtungsmuster bilden.

32. Anordnung nach einem der Ansprüche 28 bis 31, dadurch gekennzeichnet, daß die Kamera (42; 60) und die Beleuchtungseinrichtung (48; 56; 62) in Bezug auf die Produktoberfläche (41) so angeordnet sind, daß das von der Kamera (42; 60) aufgenommene Bild des Beleuchtungsmusters in einem flachen Winkel (α) an der Produktoberfläche (41) reflektiert wird.

33. Anordnung nach einem der Ansprüche 28 bis 31, dadurch gekennzeichnet, daß die Kamera und die Beleuchtungseinrichtung (48; 56; 62) in Bezug auf die Produktoberfläche (41) so angeordnet sind, daß das von der Kamera (42; 60) aufgenommene Bild des Beleuchtungsmusters in einem Winkel (α) von nahezu 90° an der Produktoberfläche (41) reflektiert wird.

## Claims

1. A method of automatic optical quality control of flat, level products with a coloured and reflecting or partially reflecting surface, in particular tiles, in which the surface (41) of each product (40) is optically detected by at least one electronic camera (11; 42; 60) and the electrical image signals delivered by the camera (11; 42; 60) are evaluated in accordance with the electronic image-processing methods in order to obtain quality measurements, with the following method steps:
- in order to perform a colour test the surface (41) of each product (40) is recorded by at least one colour camera (11) with diffuse white-light illumination;
- an image of the surface (41) of the product (40), in which a colour tone (25, 26, 27, 28) is associated with each pixel, is produced by pixel based colour classification of the image of the surface (41) of the product (40) with a colour classifier (14) which has been defined based on previously learned quality references as a reference cloud (16) within a space of features subtended by the colour vectors of pixel;
- the product (40) is graded globally into one of a plurality of set colour-tone classes based on the frequency distribution and/or the geometric shape of the colour tones (25, 26, 27, 28) associated with the pixels,
**characterized in that**
the colour classifier (14) produces the image of the surface (41) of the product even based on areas which are set in the same space of features and which correspond to the permissible colour-tone classes of the product (40), and in addition the following method steps are provided:
- in order to perform a surface test the image of an illumination pattern formed by alternating elements of differing brightness or differing colour, as reflected or partially reflected on the surface (41) of the product, is detected by at least one further camera (42; 60) at such an angle (α) that the optical beams passing between the camera (42; 60) and the illumination pattern and reflected on the reflecting or partially reflecting surface (41) are deflected by irregularities (50) on the surface onto pattern elements of different brightness or colour from those in the case of a defect-free surface (41), so that local changes in brightness or colour occur in the image recorded by the camera (42; 60);
- the surface defects (50) causing the local changes in brightness or colour are recognized by evaluation of the said local changes;
- signals for sorting the products (40) according to colour tones (25, 26, 27,28) and quality classes are derived automatically from the information obtained by the two tests.

2. A method according to Claim 1, **characterized in that** local colour defects, which become apparent in a substantial colour deviation exceeding the permissible colour tones (25, 26, 27, 28), are recognized from the frequency distribution and/or the geometrical shape of the colour tones (25, 26, 27, 28) associated with the pixels.

3. A method according to Claim 1 or 2, **characterized in that** shell-shaped classification areas (21, 22, 23, 24), which each correspond to a colour-tone class deviating correspondingly widely from the quality reference as the geometrical distance from the reference cloud (16) increases, are placed in the space of features covered by the colour vectors of each pixel around the reference cloud (1 6) of the trained-in reference surface in order to grade the product (40) into colour tones (25, 26, 27, 28).

4. A method according to one of Claims 1 to 3, **characterized in that** the shell-shaped areas (21, 22, 23, 24) corresponding to the respective colour-tone classes are shifted in such a way as compared with the position and shape of the reference cloud (16) and are distorted in their shape in such a way that, despite a colour range of the automatic system not completely corresponding to the human sense of colour, the automatic correlation into colour tones (25, 26, 27, 28) corresponds as far as possible to that which would be carried out by the human tester.

5. A method according to Claim 4, **characterized in that** the shell-shaped areas (21, 22, 23, 24) corresponding to the respective colour tones (25, 26, 27, 28) have an elongate shape orientated in the direction of the black-and-white axis of the colour range.

6. A method according to one of Claims 3 to 5, **characterized in that** the shell-shaped areas (21, 22, 23, 24) are present only outside the reference cloud (16).

7. A method according to one of Claims 3 to 5, **characterized in that** the shell-shaped areas (21, 22, 23, 24) are present only inside the reference cloud (16).

8. A method according to one of Claims 3 to 5, **characterized in that** the shell-shaped areas (21, 22, 23, 24) are present outside and inside the reference cloud (16).

9. A method according to one of the preceding Claims, **characterized in that** the histogram of the colour tones (25, 26, 27, 28) occurring in the class pattern of the colour tones is produced from the class pattern of the colour tones in order to determine the global colour tone (25, 26, 27, 28), and a statistically significant value is selected from the histogram as the global colour tone (25, 26, 27, 28) of the product (40).

10. A method according to Claim 9, **characterized in that** the statistically significant value is the abscissa of the centre of gravity of the histogram of the colour-tone classes.

11. A method according to Claim 9, **characterized in that** the statistically significant value is the abscissa of the maximum of the histogram.

12. A method according to Claim 9, **characterized in that** the statistically significant value is the abscissa of a percentile value of the histogram.

13. A method according to one of Claims 9 to 12, **characterized in that**, when determining the histogram of the colour-tone classes, freak values are not included in the histogram.

14. A method according to one of Claims 9 to 13, **characterized in that**, in addition to the statistical features of the class pattern of the colour tones the geometrical distribution of the colour classes present in the class pattern of the colour tones and determined for each pixel is taken into consideration when determining the global colour tone (25, 26, 27, 28) of the product (40).

15. A method according to one of Claims 1 to 14, **characterized in that** colour references are swung into the image field of each camera (42; 60) used for the colour test at predetermined time intervals and the system is automatically re-calibrated.

16. A method according to one of Claims 1 to 14, **characterized in that** colour references are permanently mixed into the image field of each camera (42; 60) used for the colour test and the system is automatically re-calibrated when each image is recorded.

17. A method according to Claim 1, **characterized in that** the illumination pattern used during the surface test is a stripe pattern which comprises alternating stripes of different brightness or different colour which are arranged parallel to the surface (41) of the product.

18. A method according to Claim 1, **characterized in that** the illumination pattern is formed by a two-dimensional arrangement of high-contrast elements of different brightness or different colour.

19. A method according to Claim 1, **characterized in** depending on the surface type to be investigated the illumination pattern has a structure in which the surface defects (50) to be detected result in maximum changes in brightness or colour in the image recorded by the camera (11).

20. A method according to one of Claims 1, 17, 18 or 19, **characterized in that** the illumination pattern can be altered in a computer-controlled manner.

21. A method according to Claim 20, **characterized in that** the illumination pattern is produced with the aid of a liquid-crystal display.

22. A method according to Claim 1 or one of Claims 17 to 21, **characterized in that** during the surface test a plurality of images with different illumination patterns in each case is recorded of the same point on the surface (41) of the product, and the surface defects (50) are determined by evaluating a plurality of images.

23. A method according to one of Claims 1 to 22, **characterized in that** the colour test and the surface test are carried out in two spatially separate areas.

24. A method according to one of Claims 1 to 23, **characterized in that** the colour test and the surface test are carried out in the same spatial area.

25. A method according to Claim 24, **characterized in that** the surface of the product is illuminated by the illumination pattern for the surface test in a wavelength range for which the camera (42; 60) used for the colour test is not sensitive.

26. A method according to Claim 25, **characterized in that** the wavelength range of the illumination pattern is in the near-infrared.

27. A method according to one of the preceding Claims, **characterized in that**, in order to recognize surface defects (50), the results obtained in the colour test are combined with the results obtained in the surface test.

28. An arrangement for performing the direct testing of irregularities on surfaces in the method according to one of the preceding Claims, **characterized by** an illumination device (43; 55; 61) which is designed and arranged in such a way that it illuminates the surface of the product by an illumination pattern of alternating elements of different brightness or different colour, **by** an electronic camera (42; 60) which is arranged in such a way that it records the image of the illumination pattern reflected on the surface of the product, and **by** an evaluation device (15) which evaluates the image signals delivered by the camera (42; 60) in order to recognize changes in brightness or colour in the image recorded by the camera (11) for the direct surface test.

29. An arrangement according to Claim 28, **characterized in that** the illumination device (43; 55; 61) is provided with a transparent plate or foil (44), to which opaque pattern elements (45, 46) are attached, as well as at least one light source (48) which illuminates the plate or foil (44) from the rear side remote from the camera (42; 60).

30. An arrangement according to Claim 29, **characterized in that** the opaque pattern elements (45, 46) are parallel stripes which together with the stripes of the plate or foil (44) interposed between them form the illumination pattern.

31. An arrangement according to Claim 28, **characterized in that** the illumination device (43, 55; 61) is provided with a plurality of spaced luminous elements (48, 56; 62) which together with the interspaces interposed between them form the illumination pattern.

32. An arrangement according to one of Claims 28 to 31, **characterized in that** the camera (42; 60) and the illumination device (48; 56; 62) are arranged in such a way with respect to the surface (41) of the product that the image of the illumination pattern recorded by the camera (42; 60) is reflected at a flat angle (α) on the surface (41) of the product.

33. An arrangement according to one of Claims 28 to 31, **characterized in that** the camera and the illumination device (48; 56; 62) are arranged in such a way with respect to the surface (41) of the product that the image of the illumination pattern recorded by the camera (42; 60) is reflected at an angle (α) of approximately 90° on the surface (41) of the product.

## Revendications

1. Procédé de contrôle optique automatique de la qualité de produits plats, lisses avec des surfaces colorées et réfléchissantes ou partiellement réfléchissantes, en particulier des carreaux, lors duquel la surface (41) de chaque produit (40) est détectée optiquement au moins par une caméra électronique (11, 42, 60) et les signaux d'image électriques fournis par la caméra (11, 42, 60) sont exploités pour l'obtention de mesures de qualité selon le procédé du traitement d'image électronique, comprenant les étapes de procédé suivantes:
- pour l'exécution d'un examen de couleur, on enregistre, sous éclairage diffus de lumière blanche, la surface (41) de chaque produit (41) avec au moins une caméra couleur;
- par un classement de couleur par élément d'image de l'image de la surface (41) du produit (40) avec un classificateur de couleur (14), qui a été défini comme nuage de référence (16) au moyen de références dites bonnes, acquises précédemment par apprentissage dans l'espace caractéristique défini par les vecteurs de couleur de chaque élément d'image, on produit une image de la surface (41) des produits (40), dans laquelle chaque élément d'image est associé à une nuance de couleur (25, 26, 27, 28);
- à partir de la distribution de fréquence et/ou de la forme géometrique des nuances de couleur (25, 26, 27, 28) associées aux éléments d'image, on effectue la classification globale du produit (40) dans l'une parmi plusieurs classes prédéterminées de nuances de couleur;
caractérisé en ce que le classificateur de couleur (14) produit également l'image de la surface (41) du produit au moyen de domaines déterminés dans le même espace de caractéristique, qui correspondent aux classes admissibles de nuance de couleur du produit (40), et qu'en plus, les étapes de procédé suivantes sont prévues:
- pour l'exécution d'un examen de surface, au moins une autre caméra (42; 60) supplémentaire saisit l'image d'un motif d'éclairage d'éléments alternants de luminosité ou de couleur différentes, réfléchie ou partiellement réfléchie sur la surface du produit (41), sous un angle (α) tel que les rayons optiques, passant entre la caméra (42; 60) et le motif d'éclairage, réfléchis sur la surface (41) réfléchissante ou partiellement réfléchissante, soient déviés par des inégalités (50) de la surface, sur des éléments du motif de luminosité ou de couleur différente de celle en cas de surface (41) sans défaut, de sorte que des modifications locales de luminosité et de couleur apparaissent dans l'image prise par la caméra (42, 60);
- par interprétation des modifications locales de luminosité et de couleur, on identifie les défauts (50) de surface qui en sont la cause;
- à partir des informations obtenues par les deux examens, on dérive automatiquement des signaux pour le tri des produits (40) par nuances de couleur (25, 26, 27, 28) et par catégories de qualité.

2. Procédé selon la revendication 1, caractérisé en ce que des défauts locaux de coloration sont déduits à partir de la distribution de fréquence et/ou de la forme géometrique des nuances de couleurs associées aux éléments d'image (25, 26, 27, 28), lesdits défauts locaux se manifestant par une importante divergence de couleur allant au-delà des nuances de couleurs (25, 26, 27, 28) admissibles.

3. Procédé selon la revendication 1 ou 2, caractérisé en ce que pour le tri du produit (40) en nuances de couleur (25, 26, 27, 28) dans l'espace de caractéristique défini par les vecteurs de couleur de chaque élément d'image, des domaines de classification en forme de couches (21, 22, 23, 24) sont placés autour du nuage de référence (16) de la surface de référence acquise par entrainement, lesquels correspondent chacun, avec un écartement géométrique croissant du nuage de référence (16) à une classe de nuance de couleur divergeant d'autant plus de la référence dite bonne.

4. Procédé selon la revendication 1 ou 3, caractérisé en ce que les domaines (21, 22, 23, 24) en forme de couches correspondant aux classes de nuances de couleur (25, 26, 27, 28) respectives sont si déplacés et leur forme si déformée, en comparaison avec la position et la forme du nuage (16) de référence, que l'affectation automatique en nuances de couleur (25, 26, 27, 28) correspond autant que possible à celle qui aurait été exécutée par l'examinateur humain, bien que l'espace de couleur du système automatique ne corresponde pas parfaitement à celui de la perception humaine des couleurs.

5. Procédé selon la revendication 4, caractérisé en ce que les domaines (21, 22, 23, 24) en forme de couches correspondant aux nuances de couleur respectives (25, 26, 27, 28) ont une forme allongée, alignée dans la direction de l'axe noir-blanc de l'espace de couleur.

6. Procédé selon l'une des revendications 3 à 5, caractérisé en ce que les domaines (21, 22, 23, 24) en forme de couches ne se trouvent qu'à l'extérieur du nuage de référence (16).

7. Procédé selon l'une des revendications 3 à 5, caractérisé en ce que les domaines (21, 22, 23, 24) en forme de couches ne se trouvent qu'à l'intérieur du nuage de référence (16).

8. Procédé selon l'une des revendications 3 à 5, caractérisé en ce que les domaines (21, 22, 23, 24) en forme de couches se trouvent à l'extérieur et à l'intérieur du nuage de référence (16).

9. Procédé selon l'une des revendications précédentes, caractérisé en ce que, pour l'établissement de la nuance de couleur globale (25, 26, 27, 28) à partir de l'image des classes de nuance de couleur, on établit l'histogramme des nuances de couleur se trouvant dans l'image des classes des nuances de couleur (25, 26, 27, 28) et en ce qu'on choisit dans l'histogramme une valeur statistiquement significative comme nuance de couleur globale du produit (40).

10. Procédé selon la revendication 9, caractérisé en ce que la valeur statistiquement significative est l'abscisse du centre de gravité de l'histogramme des classes de nuance de couleur.

11. Procédé selon la revendication 9, caractérisé en ce que la valeur statistiquement significative est l'abscisse du maximum de l'histogramme.

12. Procédé selon la revendication 9, caractérisé en ce que la valeur statistiquement significative est l'abscisse de la valeur maximum en pour cent de l'histogramme.

13. Procédé selon l'une des revendications 9 à 12, caractérisé en ce que, lors de l'établissement de l'histogramme des classes de nuance de couleur, des fuyards ne sont pas pris en compte dans l'histogramme.

14. Procédé selon l'une des revendications 9 à 13, caractérisé en ce que lors de l'établissement de la nuances de couleur globale (25, 26, 27, 28) du produit (40), on tient compte également, en plus des caractéristiques statistiques de l'image des classes de nuance de couleur, de la distribution géométrique de l'image des classes de nuance de couleur existantes déterminées pour chaque élément d'image.

15. Procédé selon l'une des revendications 1 à 14, caractérisé en ce que, dans des intervalles de temps déterminés, des références de couleur sont projetées dans le champ d'image de chaque caméra (42, 60) utilisée pour l'examen de couleur et en ce que le système est automatiquement recalibré.

16. Procédé selon l'une des revendications 1 à 14, caractérisé en ce que, dans le champ d'image de chaque caméra (42, 60) utilisée pour l'examen de couleur, des références d'image sont superposées en permanence et en ce que le système est automatiquement recalibré à chaque prise de vue.

17. Procédé selon la revendication 1, caractérisé en ce que le motif d'éclairage utilisé lors de l'examen de surface est une mire consistant en une alternance de lignes de luminosité différente ou de couleur différente, qui sont disposées parallèlement à la surface du produit (41).

18. Procédé selon la revendication 1, caractérisé en ce que la revendication 1, caractérisé en ce que le motif d'éclairage est formé par un arrangement bidimensionnel d'éléments à grand contraste, de luminosité différente ou de couleur différente.

19. Procédé selon la revendication 1, caractérisé en ce qu'en fonction du type de surface à analyser, le motif d'éclairage a une structure pour laquelle les défauts de surface (50) à détecter provoquent des modifications maximales de luminosité ou de couleur dans l'image prise par la caméra (11).

20. Procédé selon l'une des revendications 1, 17, 18 ou 19, caractérisé en ce que le motif d'éclairage est modifiable par commande par ordinateur.

21. Procédé selon la revendication 20, caractérisé en ce que le motif d'éclairage est produit au moyen d'un écran à cristaux liquides.

22. Procédé selon la revendication 1 ou l'une des revendications 17 à 21, caractérisé en ce que lors de l'examen de la surface du même endroit de la surface du produit (41) plusieurs images sont prises, respectivement avec d'autres motifs d'éclairage et en ce que les défauts de surface (50) sont déterminés par exploitation de plusieurs images.

23. Procédé selon l'une des revendications 1 à 22, caractérisé en ce que l'examen de couleur et l'examen de la surface sont réalisés dans deux zones spatialement séparées.

24. Procédé selon l'une des revendications 1 à 22, caractérisé en ce que l'examen de couleur et l'examen de la surface sont réalisés la même zone de l'espace.

25. Procédé selon la revendication 24, caractérisé en ce que l'éclairage de la surface du produit au travers du motif d'éclairage, pour l'examen de surface, a lieu dans une plage de longueur d'onde, dans laquelle la caméra utilisée pour l'examen de couleur n'est pas sensible.

26. Procédé selon la revendication 24, caractérisé en ce que la plage de longueur d'onde de le motif d'éclairage se situe dans le proche infrarouge.

27. Procédé selon l'une des revendications précédentes, caractérisé en ce que, pour l'identification de défauts de surface (50), les résultats obtenus lors de l'examen de couleur sont combinés avec les résultats obtenus lors de l'examen de surface.

28. Agencement pour réaliser l'examen direct des inégalités (50) sur des surfaces selon le procédé selon l'une des revendications précédentes, caractérisé par un dispositif d'éclairage (43, 55, 61), qui est formé et disposé de telle sorte qu'il éclaire la surface du produit par un motif d'éclairage constitué par l'alternance d'éléments de luminosité ou de couleur différentes, par une caméra électronique (42, 60), disposée de telle sorte, qu'elle prend l'image du motif d'éclairage réfléchie sur la surface du produit, et par un dispositif d'exploitation (15) qui interprète les éléments d'image fournis par la caméra (42, 60) pour l'identification de modifications de luminosité ou de couleur dans l'image prise par la caméra (11) pour l'examen direct de la surface.

29. Agencement selon la revendication 28, caractérisé en ce que le dispositif d'éclairage (43, 55, 61) présente une plaque ou feuille (44) transparente, sur laquelle se trouvent les éléments opaques (45, 46) du motif ainsi qu'au moins une source de lumière (48) qui éclaire la plaque ou la feuille (44) depuis la face arrière détournée de la caméra.

30. Agencement selon la revendication 29, caractérisée en ce que les éléments opaques (45, 46) du motif sont des bandes parrallèles, qui forment avec les bandes de la plaque ou de la feuille (44) se trouvant entre elles le motif d'éclairage.

31. Agencement selon la revendication 28, caractérisé en ce que le dispositif d'éclairage ( 43, 55, 61) présente plusieurs lampes écartées les unes des autres, qui forment avec les intervalles se trouvant entre elles le motif d'éclairage.

32. Agencement selon l'une des revendications 28 à 31, caractérisé en ce que la caméra (42, 60) et le dispositif d'éclairage (48, 56, 62) sont disposés de telle sorte par rapport à la surface du produit (41) que l'image prise du motif d'éclairage est réfléchie à la surface du produit (41) sous un angle plat (α).

33. Agencement selon l'une des revendications 28 à 31, caractérisé en ce que la caméra et le dispositif d'éclairage (48, 56, 62) sont disposés de telle sorte par rapport à la surface du produit (41) que l'image prise du motif d'éclairage est réfléchie à la surface du produit (41) sous un angle (α) de presque 90°.
